# EUROPEAN PATENT APPLICATION

(11) **EP 1 471 475 A2**
(43) Date of publication of application: **27.10.2004**
(21) Application number: 04252006.4
(22) Date of filing: 02.04.2004
(51) Int. Cl.: G07F 19/00

(54) **Integrated payment system and method**

(30) Priority: 25.04.2003 US 423842
(71) Applicant: Metavante Corporation, Brown Deer, Wisconsin 53223 (US)
(72) Inventor: Amalraj, Peter, San Jose, CA 95135 (US); Dryburgh, Walter Scott III, Brookfield, WI 53005 (US); Srinivasan, Shankar, Saratoga, CA 95134 (US); Sharma, Dushyant, Richmond Hill, Ontario L4C OG5 (CA)
(74) Representative: Roberts, Gwilym Vaughan

(57) **Abstract**

An automated computer based payment system and method allows a variety of different payment requesting sources (72) to be coupled to a variety of payment processors (74). An integrated payment engine (70) receives payment requests (76) from the payment requesting sources (72) and generates therefrom payment instructions that are delivered to the payment processors (74). The integrated payment engine (70) employs profile information defining payment requesting source and payment processor (74) preferences and requirements to generate the payment instructions from the payment requests (76). Additional and/or different payment requesting sources (72) and payment processors (74) can be integrated into the system easily by modifying the profile information. The integrated payment engine (70) also employs flexible risk and operational preferences to generate automatically a payment instruction which will implement the payment request (78) so as to optimize a balance of factors associated with making a payment, such as risk and cost.

## Description

### FIELD OF THE INVENTION

This invention pertains generally to the field of automated computer based financial transaction processing and accounting, and more particularly to automated computer based methods and systems for making payments such as bill payments, refund payments, stock dividend and bond interest payments, person to person payments, inter-bank funds transfers, and the like.

### BACKGROUND OF THE INVENTION

A payment may be characterized as any transfer of money or other funds between a payer and a payee. Examples of payments include refund payments, stock dividend and bond interest payments, person to person payments, inter-bank funds transfers, and the like. An exemplary and typical type of payment is a bill payment. In the most traditional form of bill presentment and payment a provider of goods or services (the biller) physically hands to a consumer of the goods or services a bill for the goods or services that were provided and the consumer, in response, physically hands payment over to the biller to pay the bill. The payment may be in the form of cash or in the form of a payment vehicle such as a check, a credit or debit card, etc. Alternatively, a biller may mail a bill to a consumer, or have a third party service provider send out the bill, and the consumer may make payment by mail, e.g., by mailing a check to the biller or to a third party that handles bill payment for the biller. If a payment is made in a form other than cash, processing of the payment by one or more third parties, typically financial institutions, is required. Typically such processing will be required by both the consumer's and the biller's financial institution to affect a transfer of payment funds from the consumer's account (checking, credit card, etc.) to the biller's account.

Computer based systems are employed to facilitate the bill presentment and payment process. Computer systems may be employed by billers, or third parties hired by billers, to generate automatically and keep track of customer bills, including such data as which bills have been presented to which consumers, whether payment has been received in a timely manner, etc. The biller, or third party, may also keep track of information regarding a consumer's failure to make timely and adequate bill payments. For example, the biller may keep track of consumers who have attempted to make bill payments by checks drawn on accounts with insufficient funds, and may thus require such consumers to make future payments in another manner, such as with cash or a money order. Financial institutions employ computer systems for automated account processing. Thus, the process of transferring funds from a consumer account to a biller account is almost fully automated once the consumer's payment vehicle (check, credit card charge, etc.) is presented by the biller for payment.

Recently, computer based systems have been utilized both to present bills to consumers online, e.g., over a computer network, such as the Internet, and to accept payments from consumers over a computer network. Such an automated system requires interaction and coupling across various entities to present a bill, generated by a biller, to a consumer, to accept a bill payment from the consumer, and to process the payment to transfer funds from a consumer account to a biller account.

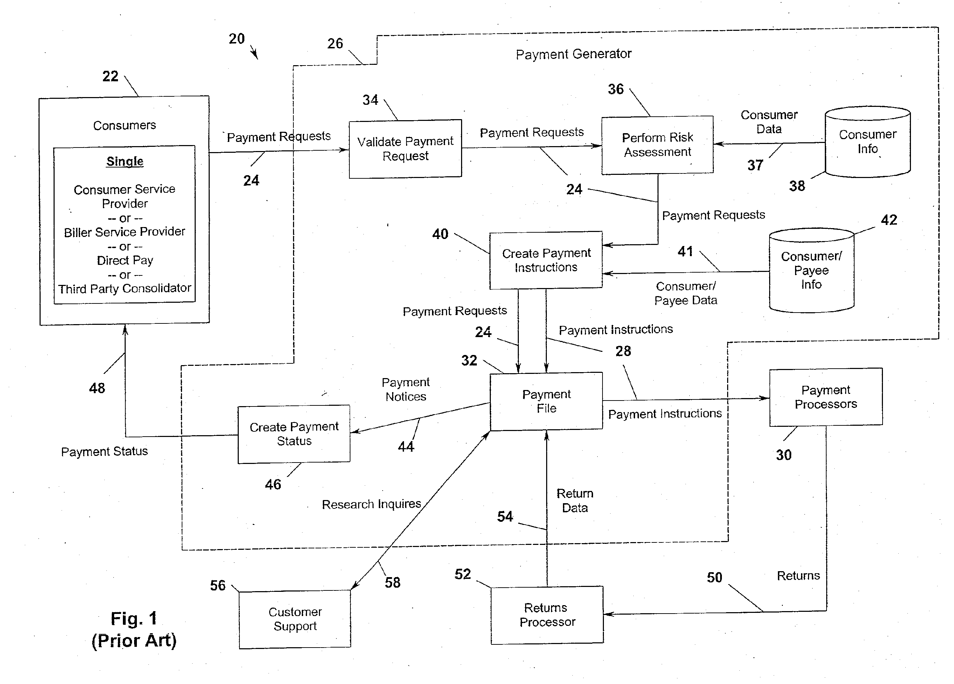

An exemplary system configuration of a current automated computer based bill payment system 20, such as may be used by a consumer to pay bills online, is illustrated in Fig. 1. In such a system, a consumer employs a payment requesting source 22 to generate a payment request 24. The payment request 24 is processed by a payment generator 26, which, in turn, generates a payment instruction 28 that is delivered to a payment processor 30. The payment processor 30 generates a payment for transferring funds from the consumer to a biller to pay a bill. For the most part, the process of bill payment from consumer to biller may be entirely automated by such a system.

There are a variety of different types of payment requesting sources 22 via which consumers currently may receive bill presentment and initiate bill payment. In general, a payment requesting source is a facility whereby a consumer may initiate a bill payment, typically via a computer connection to the payment requesting source, e.g., over a computer network, such as the Internet. Payment requesting sources manage their own consumer front-ends and all data collection for payment requests submitted by their consumer customers. The payment requesting source also manages the consumer's demographics, preferences, and payee information. Payment requesting sources may provide "good or guaranteed funds" processing, establish payment limits, and warehouse future scheduled payments. The payment requesting source also may edit the payment request to insure that it meets the payee's constraints. Typical conventional payment requesting sources include consumer service providers (CSPs), direct pay sources, biller service providers (BSPs), and third party consolidators.

A consumer service provider (CSP) payment requesting source is a consumer oriented front-end application. Typically, a CSP includes a user interface, often Internet web-based, which provides the consumer with the necessary tools and options to carry out bill receipt and payment functions. The CSP may be accessed by the consumer via an online electronic banking system offered by a bank or other financial institution, or by another portal.

In a direct pay system, a consumer enters billing information that the consumer has received independently of the bill payment system. For example, the consumer may use a direct pay system to pay a bill to a biller which the consumer has received in the mail or over a computer network from a source other than the bill payment system itself. A direct pay system is also known as a "pay anyone" service, and may be an Internet web based system.

A biller service provider (BSP) payment requesting source is a biller oriented application that the consumer can access to carry out bill receipt and payment functions. A BSP may be implemented as an Internet web site that hosts multiple biller sites (e.g., a financial institution which maintains and processes accounts for multiple billers may provide a BSP which allows a consumer to pay bills to any of the financial institution's customers) or by a single biller hosting their own BSP site.

Third party consolidator payment requesting sources are run by other parties that present bills to consumers, collect payment information, and forward payment requests 24 to a payment generator 26 for processing.

In conventional bill payment systems, the payment generator 26 is an automated computer based system that receives payment requests 24 from a payment requesting source 22 and, in response thereto, generates payment instructions 28 that are forwarded to a payment processor 30. The payment generator 26 is thus a store-and-forward processor which receives payment requests 24, expands the information provided in the payment requests 24 to generate payment instructions 28, stores the resulting payment instructions 28 along with the payment requests 24 in a payment file 32, and forwards the payment instructions 28 to a payment processor 30.

Typically, the first function performed by a conventional payment generator 26 upon the receipt of a payment request 24 from a payment requesting source 22 is to validate 34 the payment request 24. The validation process 34 verifies that a payment request 24 received from a payment requesting source 22 contains sufficient and complete information to allow the payment generator 26 to generate a payment instruction 28 therefrom. For example, the validation process 34 may verify that the payment request 24 has complete information to identify the consumer account from which the bill is to be paid, to identify the biller to which the payment is to be made, to identify the specific consumer account at the biller to which the payment is to be credited, etc. If the payment request 24 is not validated 34, the payment generator 26 cannot generate a payment instruction 28 therefrom. In such a case, the payment generator 26 may inform the payment requesting source 22 that a payment request 24 is invalid and must be modified and resubmitted before it can be processed by the payment generator 26.

Once a payment request 24 has been validated 34, the payment generator 26 may perform a risk assessment 36 to determine the payment method which should be employed to generate the payment instruction 28. The risk assessment 36 may be based on consumer information 37 stored in a consumer information database 38 which is part of, or accessible by, the payment generator 26. Portions of the consumer information 37 stored in the consumer information database 38 may be generated by the payment generator 26 itself, e.g., based on prior experience by the payment generator 26 in generating payments for the consumer, and/or may be obtained from external sources of consumer information, e.g., from third party financial institutions and/or consumer information reporting services. For example, if a particular consumer has failed to have sufficient funds in a checking account to cover a bill payment in the past, this may be noted in the information 37 in the consumer information database 38, and the risk assessment process 36 may determine, therefore, that another payment method will be required when generating a payment instruction 28. Consumer information 37 also contains demographic and funding account data entered by the consumer.

Having validated 34 a payment request 24, and conducted a risk assessment 36 to determine an appropriate payment method, the payment generator 26 creates 40 a payment instruction 28 that will be forwarded to a payment processor 30. The payment instruction 28 is created 40 based on the information in the payment request 24, the result of any risk assessment 36, and consumer/payee information 41 stored in a consumer/payee information database 42 which is part of, or accessible by, the payment generator 26. The consumer/payee information 41 includes payee data which may be entered or maintained by a consumer. The consumer/payee information 41 includes more detailed information identifying the payee, i.e., concerning the payment destination. Based on the information in the payment request 24 and the method of payment determined by the risk assessment 36, the payment instruction 28 is created using the information 41 in the consumer/payee information database 42 in a format determined by the payment processor 30 to which the payment instruction 28 is to be sent.

Generated payment instructions 28, along with the payment requests 24 on which they are based, are stored in a payment file 32 in the payment generator 26. From the payment file 32, the payment instructions 28 are sent to payment processors 30, which, in turn, generate the actual payments. When a payment instruction 28 is sent to the payment processor 30 the status of the bill may be indicated as paid in the payment file 32. A payment notice 44 also may be generated, indicating that a payment has been made. The payment notice 44 is used to generate 46 a payment status report 48 which may be provided to the consumer, e.g., via the payment requesting source 22, to indicate to the consumer that a bill has been paid.

Payment processors 30 generate the actual payments to the billers in response to the payment instructions 28 received from the payment generator 26. The payment generator 26 must generate the payment instruction 28 in the proper format for the payment processor 30 to be able to generate an appropriate payment automatically in response to the payment instruction 28. Payment processors 30 include banks, and other financial institutions, which are certified Automatic Clearing House (ACH) originators, check and draft printers, credit card transaction acquirers, debit card networks, switches, and entities such as MasterCard remote payment and presentation (RPPS), Visa ePay, and other payment processing destinations.

Sometimes a payment generated by a payment processor 30 may be returned because of a failure of the payment to go through. For example, if the payment processor 30 issues a check on a consumer's bank account, in response to a payment instruction 28 from the payment generator 26, and there are insufficient funds in the consumer's account to cover the check amount, the payment may be returned as unpaid. A returned payment typically is reported back to the consumer via the payment generator 26. If a payment is returned from the payment processor 30 to the payment generator 26, the payment file 32 must be updated to indicate that the bill which was attempted to be paid has, in fact, not been paid. Returns reporting typically is implemented by the payment processor 30 providing a returns notice 50 to a returns processor 52, which, in turn, accesses the payment generator 26 to update the payment file 32 with the appropriate return data 54 to indicate that a bill payment attempt has failed and that the bill thus remains unpaid. In current bill payment systems, the returns processor 52 requires intensive manual processing to match a returned transaction to the originating payment transaction (e.g., via a trace number) and to update the status of the corresponding payment request and other payment information in the payment file 32. Returns are reported to the consumer via a payment notice 44 (in this case a failed payment notice) generated from the payment file 32, from which a payment status notification 48 is generated 46 and delivered to the consumer, via the payment requesting source 22, to notify the consumer of the updated bill payment status (in this case, that the bill remains unpaid).

In current bill payment systems, customer support 56 typically is provided through customer service representatives (CSRs). CSRs perform inquiry, research, adjustments or other actions that support consumer bill payment activities. In order to perform such functions, the CSRs typically must have access to the payment generator 26, specifically to the payment file 32, in order to conduct research inquiries 58 into the status of a consumer's bill payment requests and instructions, which information is stored in the payment file 32.

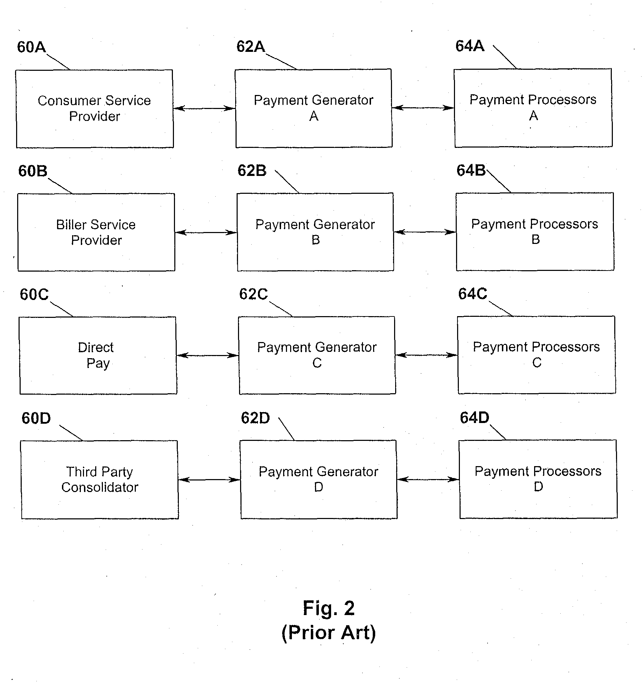

Automated computer based payments processing currently is implemented using a tightly coupled systems model in which the various entities, e.g., payment requesting source, payment generator, and payment processors, that contribute to the processing of a bill payment are linked tightly to each other. For, example, as illustrated in Fig. 2, in current computer based bill payment systems, different front end payment requesting sources 60A-D are coupled via corresponding uniquely defined and implemented payment generators 62A-D to corresponding payment processors 64A-D. Each payment generator 62A-D is uniquely defined and implemented to process payment requests from a corresponding payment requesting source 60A-D (or group of closely related payment requesting sources), based on the type and format of payment request information which is provided in the payment request, to deliver payment instructions to corresponding payment processors 64A-D, based on the type and format of the payment instruction required by the payment processors 64A-D. The tight coupling of current bill payment systems results in a need to implement, manage, and support a different payment generator for each payment requesting source that has different preferences, constraints, and/or uses different payment processors. As an example, often CSPs and BSPs have different preferences and constraints regarding payment methods, thus requiring different payment generators be developed and maintained for each. In current systems, payment generators are effectively "hard wired" to operate with specific payment requesting sources and payment processors. In current systems, a payment generator cannot be changed to add additional or different requestors and suppliers without a great deal of difficulty (extensive development work).

What is desired, therefore, is an automated computer based bill payment system and method in which a variety of payment requesting sources and payment processors may be coupled in a loose and flexible manner, such that a variety of such payment requesting sources and payment processors may be integrated easily. In particular, what is desired is a payment generator or payment engine that has the flexibility to process payment requests from a variety of payment requesting sources, including CSPs and BSPs, as well as the flexibility to use a variety of payment processing destinations to execute the payments, without the time and expense required to change the tightly coupled systems used in known bill payment systems.

A tightly coupled system does not provide the flexibility needed to add, in an efficient and effective manner, additional payment requesting sources, payment rule decisions, and payment processing destinations as required to expand system capabilities. This lack of flexibility limits the ability of current systems to handle payments differently based on criteria that are defined by the payment requesting sources, biller, or payment processor, such as automatically selecting a payment route or flow based on cost or other parameters that are specified by bill payment partners.

What also is desired, therefore, is an automated computer based bill payment system and method which provides unique flexible processing capabilities for optimizing bill payment generation and flow based on flexibly defined parameters.

### SUMMARY OF THE INVENTION

The present invention provides an integrated payment system and method employing a logical framework that encompasses the various components and entities necessary to implement a payment system without requiring direct linkage or tight coupling between them. The present invention thus provides for the easy and flexible integration of a variety of payment entities. For example, the present invention may provide for the easy and flexible integration of a variety of payment requesting sources and payment processors in an integrated bill payment system. An integrated bill payment system and method in accordance with the present invention has the capability to process payment requests from multiple different payment requesting sources, such as consumer service providers (CSPs), biller service providers (BSPs), and other payment requesting sources. The present invention employs a payment engine that may be configured in a flexible manner to provide payment services for a variety of payment requesting sources. Due to the flexible integration provided by a payment engine in accordance with the present invention, an integrated bill payment system and method in accordance with the present invention can accommodate additional payment requesting sources being added to the system without requiring undue time and expense spent in enhancing the payment engine. The present invention also provides an automated bill payment system and method with unique processing capabilities for optimizing the automatic generation of payments based on flexible parameters. The present invention is applicable to any system and method for making payments or funds transfers between parties or accounts. Thus, in addition to bill payment, other uses of the invention include refund payments, stock dividend and bond interest payments, person-to-person payments, inter-bank funds transfers, and the like.

In an integrated bill payment system and method in accordance with the present invention, a variety of payment requesting sources may be coupled loosely together with a variety of payment processors via a single flexible payment generator processor known herein as an integrated payment engine. An integrated payment engine in accordance with the present invention may be used to couple together a variety of consumer service provider (CSP), biller service provider (BSP), direct pay, third party consolidator, and/or other payment requesting sources with a variety of payment processors. A single integrated payment engine in accordance with the present invention can meet the constraints and preferences of each payment requesting source or payment processor to which it is coupled. An integrated payment engine in accordance with the present invention is implemented to be flexible, such that additional payment requesting sources and payment processors can be integrated into a bill payment system and method in accordance with the present invention with ease, that is, without significant development effort.

An integrated payment engine in accordance with the present invention also preferably implements unique processing methods for generating payment instructions, to be forwarded to payment processors, from payment requests, which are received from a variety of payment requesting sources. Based on a variety of criteria, such as consumer and biller preferences, risk information, and operational preferences, an integrated payment engine in accordance with the present invention may flexibly and automatically select the most suitable payment method and generate the most suitable payment instruction from a number of available alternatives. Thus, the present invention provides a dynamic mechanism for optimizing payments, such as for optimizing payment instructions to manage the costs of executing a payment.

An integrated payment engine in accordance with the present invention preferably includes a store-and-forward component, which will be referred to herein as a payment warehouse. The payment warehouse receives payment requests from a variety of payment requesting sources, verifies and expands the received payment requests as necessary, and sends the expanded payment requests to a payment method engine to be transformed into payment instructions. Payment instructions generated by the payment method engine are returned to the payment warehouse and stored therein until they are retrieved from the payment warehouse by a payment instruction router to be forwarded to a payment processor.

The payment warehouse function expands the received payment requests using consumer information, consumer/payee information, master payee list information, and remittance information, all of which, preferably, is stored in information tables accessible by the payment warehouse function. Consumer information includes demographic and preference data entered by a consumer, e.g., via a payment requesting source. It also includes processing parameters established by the sponsoring bank or portal and service provider which is providing the payment requesting source to the consumer. Consumer/payee information includes payee data as entered, selected, or parsed from a list or maintained by the consumer. Master payee list information includes payee data as contained in biller statements which are sent to consumers. Remittance information includes payee data as developed by the bill payment service provider. Remittance information relates to specific methods to be used in remitting payments and payment advice to the payee. This data may be considered to be confidential and proprietary to the service provider.

The payment method engine applies the appropriate business logic to transform an expanded payment request provided from the payment warehouse into one or more payment instructions. To generate a payment instruction from a payment request, the payment method engine may make various determinations. The payment method engine may determine payment requesting source preferences. These are the constraints and preferences that the consumers and payment requesting sources may place on payments. As part of this process, the payment method engine may edit the consumer's payment request to ensure that it meets any payee constraints to be placed on the payment. The payment method engine may determine the financial risks associated with the payment, e.g., due to previous failures of the customer to cover bill payments or fraud, and select from among appropriate payment method alternatives to mitigate the risk. The payment method engine may determine payment operational preferences to optimize the payment using operational criteria. For example, based on the possible payment method alternatives available based on the payment requesting source preferences and financial risk determination, the payment method engine may generate the payment instruction which will implement a bill payment with the lowest cost, or which will satisfy some other operational criteria. Thus, based on the payment requesting source, financial risk, operational, and any other preferences or criteria, the payment method engine generates a payment instruction in response to the expanded payment request. The payment method engine may generate more than one payment instruction from a single payment request. This may be done to allow debits (from the consumer account) and credits (to the biller account) to be sent through different payment processors, to allow debits and credits to be sent on different days or times, and/or to facilitate consolidation of debits or credits to the same party, etc.

Information for determining payment requesting source preferences, financial risk, operational preferences, and other preferences for generating the payment instructions from payment requests, is provided in a database of profiles. The profiles define the attributes of each of the payment requesting sources to which the integrated payment engine may be coupled (e.g., CSPs, direct pay, BSPs, third party consolidators, etc.), payment processing destinations and participants (e.g., banks or other financial institutions, billers, payment processors, etc.) and certain system components (e.g., agents, protocols, etc.). The profiles define the specific characteristics of the sources, destinations, and components that the payment method engine uses to process the payment requests. To integrate additional and/or different payment requesting sources and/or payment processors together via the integrated payment engine it thus only is necessary to add to or update the appropriate attribute information in the database of profiles (and to add the necessary transaction data network links). Thus, a variety of payment requesting sources and payment processors may be integrated via an integrated payment engine in accordance with the present invention without a significant development effort.

Payment instructions generated in the payment method engine are returned to the payment warehouse where they are stored, along with the expanded payment requests, by a payment request and payment instruction event manager. The payment request and payment instruction event manager enters the payment instructions received from the payment method engine into payment request/payment instruction tables. Payment instructions are delivered from the payment request and payment instruction event manager to a payment instruction router for routing, via the appropriate agents and protocols, to payment processors. The payment request and payment instruction event manager also may generate payment notices, which are used to generate payment status reports that are delivered to consumers, e.g., via a payment requesting source, based on event manager triggers, such as the delivery of a payment instruction to the payment instruction router.

The payment instruction router retrieves payment instructions that are due to be forwarded to payment processors from the payment warehouse at the appropriate date and time. Payment instructions are routed to the appropriate payment processor via the appropriate agent and protocol. The payment instruction router places payment instructions in an agent queue table based on identifying codes placed in the payment instruction by the payment method engine. The payment instruction router manages the number of items in the agent queue table, records error handling, and may spawn multiple copies of the same agent to provide system load leveling. The payment instruction router preferably also provides logging for all transactions that go through the system at each stage, as well as for the history of changes to a transaction. This logged information, as well as recorded agent queue management data, may be accessed by a support and administrative function of the integrated payment engine.

Agents act on the payment instructions from the agent queue in the payment instruction router to create final outbound payment transactions that are sent to the appropriate payment processors using the appropriate protocols. Each payment processor is identified by a unique agent, which defines the characteristics of the payment processor to which the payment instruction is to be sent. Payment instructions are formatted to meet the protocol used by the third party payment processor to whom the payment instruction is to be sent. Agents may also create remittance advice notifications to billers and other entities that may require a separate data file, in addition to the payment itself, that lists all settlement requests from or to them. Remittance advice generated in this manner by an agent are delivered to the appropriate entity via the appropriate protocol.

Returned transactions, i.e., transactions returned by a payment processor because the transaction called for by a payment instruction failed, are received by a returns processor function of the integrated payment engine. Returned transactions may be the result, for example, of an attempt to make a payment from an account with insufficient funds to cover the payment, or of many other possible reasons. The returns processor converts the return transaction or file received from a payment processor from the format used by that processor into a system standard format that includes the return transaction, reason codes, and a trace number to tie the return back to the originating payment transaction. The returns processor then matches the returned transaction to the originating payment transactions (via the trace number) and updates the status of the corresponding payment request and payment instruction in the payment warehouse. The returns processor may also generate biller reversals, where permitted.

Payments generated by an integrated payment engine in accordance with the present invention may involve a series of two or more payment transactions. For example, depending on the various criteria considered during payment instruction generation by the payment method engine, a single bill payment may be implemented by a first transaction in which a consumer's account is debited, followed by a second and separate transaction, after funds from the consumer's account are secured, by which the funds are credited to a biller's account. Often the separate debit and credit payment transactions may occur on different days. An integrated payment engine in accordance with the present invention preferably implements a reconciliation function or process to match and reconcile such separated debit and credit payments which are created by processing a payment request by the integrated payment engine. The reconciliation process calculates the net settlement position. The reconciliation function or process may be implemented as part of the payment warehouse.

The payment warehouse may store and generate payment notices concerning the status of payments requested to be made by consumers. The payment notices may indicate, for example, that a payment instruction has been forwarded to a payment processor. The payment notices may also include payment status information received back from various sources, such as the payment processors, e.g., information that an attempted payment has been returned. From the payment notices, the payment warehouse may generate payment status messages which may, in turn, be sent back to the consumer, e.g., via the payment requesting source.

An integrated payment engine in accordance with the present invention preferably also provides an administrative and support function which includes customer support and system administrative processes. The customer support function preferably allows customer support representatives to access customer payment request and instruction data stored in the payment warehouse, to conduct research inquires, and to take other actions as necessary to assist consumers who are using the system to make bill payments. Inquiries and actions performed by the customer support function preferably are logged in the payment warehouse, thus providing a complete audit trail of all activities associated with a payment request. The system administration function provides back-office type administration functions that allow operators of an integrated bill payment system in accordance with the present invention to set up and manage the various system components and profiles within the integrated payment engine.

The unique functions and features provided by an integrated bill payment system and method in accordance with the present invention provide many benefits over conventional bill payment systems.

By allowing flexible integration of a variety of payment requesting sources and payment processors, a payment engine in accordance with the present invention may be configured to provide payment services for multiple CSPs, BSPs, and other payment requesting sources. Furthermore, additional payment requesting sources may be added to an integrated bill payment system in accordance with the present invention without requiring undue time and expense spent in enhancing the payment engine. By employing flexible criteria to select automatically from among a variety of available payment methods and routes, an integrated bill payment system and method in accordance with the present invention reduces risk exposure, due to not receiving consumer's payments or due to fraud, by selecting an appropriate funds model (e.g., good funds or guaranteed funds). By reducing the need for human interaction and paper payments in the bill payment process, the overall cost of bill payment processing can be reduced. This cost benefit is enhanced by the use of cost based operating parameter criteria in the process of generating a payment instruction. The present invention thus also provides a mechanism that can optimize the cost reduction of making a payment by calculating the cost of fulfilling a payment based on the various payment methods available and using appropriate cost calculation criteria, and then choosing the least cost payment method to implement automatically. The present invention also permits the use of innovative payment structures such as escrow payments and batching payments for the convenience of the payment processor.

Further objects, features, and advantages of the present invention will be apparent from the following detailed description, taken in conjunction with the accompanying drawings.

The present invention further comprises:
An automated method for payment, comprising:
   (a) storing in a profile database payment preference information for a plurality of payment entities selected from the group of payment entities consisting of payment requesting sources, billers, bank/clients, and payment processors;
   (b) receiving a payment request from a payment requesting source;
   (c) generating a payment instruction from the payment request and the payment preference information; and
   (d) sending the payment instruction to a payment processor.
An automated system for making payments, comprising:
   (a) a profile database including payment preference information for a plurality of payment entities selected from the group of payment entities consisting of payment requesting sources, billers, bank/clients, and payment processors;
   (b) a payment warehouse database for receiving payment requests from a payment requesting source and storing the payment requests and payment instructions therein;
   (c) a payment method engine coupled to the profile database and the payment warehouse database and adapted to generate payment instructions from the payment requests and the payment preference information in the profile database and sending the generated payment instructions to the payment warehouse database for storage therein; and
   (d) a payment instruction router coupled to the payment warehouse database and adapted to send payment instructions from the payment warehouse database to a payment processor.
An automated method for payment, comprising:
   (a) receiving payment requests from a plurality of payment requesting sources of different types;
   (b) generating payment instructions from the payment requests received from the payment requesting sources; and
   (c) sending payment instructions to a payment processor, and preferably wherein receiving payment requests from a plurality of payment requesting sources of different types includes receiving payment requests from at least one consumer service provider payment requesting source and at least one biller service provider payment requesting source and wherein generating payment instructions includes generating payment instructions from the payment requests received from the consumer service provider payment requesting source and the biller server provider payment requesting source, and preferably comprising additionally storing in a profile database payment preference information for the plurality of payment requesting sources and wherein generating payment instructions includes generating payment instructions from the payment requests and the payment preference information for the bill payment requesting sources from which the payment requests are received, and preferably comprising additionally modifying the bill payment preference information stored in the profile database to add bill payment preference information for another payment requesting source thereto.
Embodiments of the invention will now be described, by way of example, with reference to the drawings, of which:

Fig. 1 is a block diagram illustration of the system components and configuration of a known computer based bill payment system including a conventional payment generator and the functions performed thereby.

Fig. 2 is a block diagram illustrating the tight coupling between payment requesting sources, payment generators, and payment processors in a conventional computer based bill payment system.

Fig. 3 is a block diagram of an exemplary integrated bill payment system and method in accordance with the present invention including an integrated payment engine for flexible coupling of a variety of different payment requesting sources with payment processors.

Fig. 4 is a block diagram of an exemplary integrated bill payment system in accordance with the present invention, showing in detail exemplary functional components of an integrated payment engine in accordance with the present invention for generating payment instructions from customer payment requests.

Fig. 5 is a block diagram illustrating in detail exemplary functional components of a payment warehouse component of the exemplary integrated payment engine in accordance with the present invention of Fig. 4.

Fig. 6 is a block diagram illustrating in detail exemplary functional components of a payment method engine component of exemplary integrated payment engine in accordance with the present invention of Fig. 4.

Fig. 7 is a block diagram illustrating exemplary profile data employed by the exemplary payment method engine of Fig. 6.

Fig. 8 is a block diagram illustrating in detail exemplary functional components of a payment instruction router of the exemplary integrated payment engine in accordance with the present invention of Fig. 4.

Fig. 9 is a block diagram illustrating exemplary payment processor agents and protocols that may be used by the exemplary integrated payment engine in accordance with the present invention of Fig. 4.

Fig. 10 is a flow chart diagram illustrating an exemplary process in accordance with present invention as may be performed by the payment warehouse of Fig. 5.

Fig. 11 is a flow chart diagram illustrating an exemplary process in accordance with the present invention as may be performed by the payment method engine of Fig. 6 to generate a payment instruction from a payment request.

Fig. 12 is an illustration of exemplary automatically triggered payment instruction workflows.

Fig. 13 is an illustration of exemplary manually triggered (exception) workflows.

Fig. 14 is an illustration of the exemplary relationship between the elements and instructions forming an exemplary payment instruction workflow as may be generated and selected by the payment method engine of Fig. 6.

### DETAILED DESCRIPTION OF THE INVENTION

The present invention will be described in detail with reference to the accompanying drawings that illustrate, via block diagrams and flow-charts, the implementation and operation of an exemplary integrated payment system and method in accordance with the present invention. An exemplary integrated payment system and method in accordance with the present invention will illustrated and described herein with reference to the exemplary embodiment of an integrated bill payment system and method for the payment of bills issued by providers of goods and services (billers) to their customers (consumers). It should be understood, however, that the present invention is not limited to such an application, but may be employed in any application for the processing of payments from a payer (consumer) to a payee (biller). Thus, in addition to conventional bill payments, other applications of the present invention may include the making of payments such as refund payments, stock dividend and bond interest payments, person to person payments, inter-bank funds transfers, etc. Based on the detailed description and drawings provided herein, a programmer skilled in the art of computer based bill presentment and payment processing systems and methods will be able to implement an integrated bill payment system and method in accordance with the present invention on conventional commercially available computer systems using conventional programming languages and techniques. The size, type, and processing power of the computers employed to implement the present invention may depend on the volume of bill payments to be processed, as well as required or desired processing times.

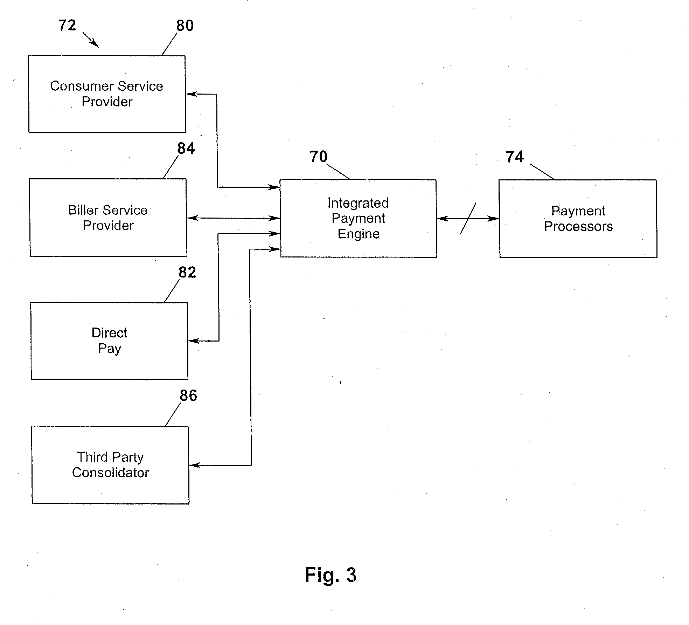

As illustrated in Fig. 3, in accordance with the present invention, a single integrated system, known herein as an integrated payment engine 70, may be used to couple a variety of different payment requesting sources 72 and payment processors 74 in an integrated automated computer based bill payment system. The integrated payment engine 70 receives payment requests from the various payment requesting sources 72 and generates therefrom payment instructions which are delivered to various payment processors 74. Each payment requesting source 72 and payment processor 74 integrated into the system may have its own operational preferences and requirements. As will be discussed in more detail below, the integrated payment engine 70 loosely couples the payment requesting sources 72 to the payment processors 74 in a manner such that additional and/or different payment requesting sources and payment processors may be integrated into the system easily, i.e., without a significant development effort.

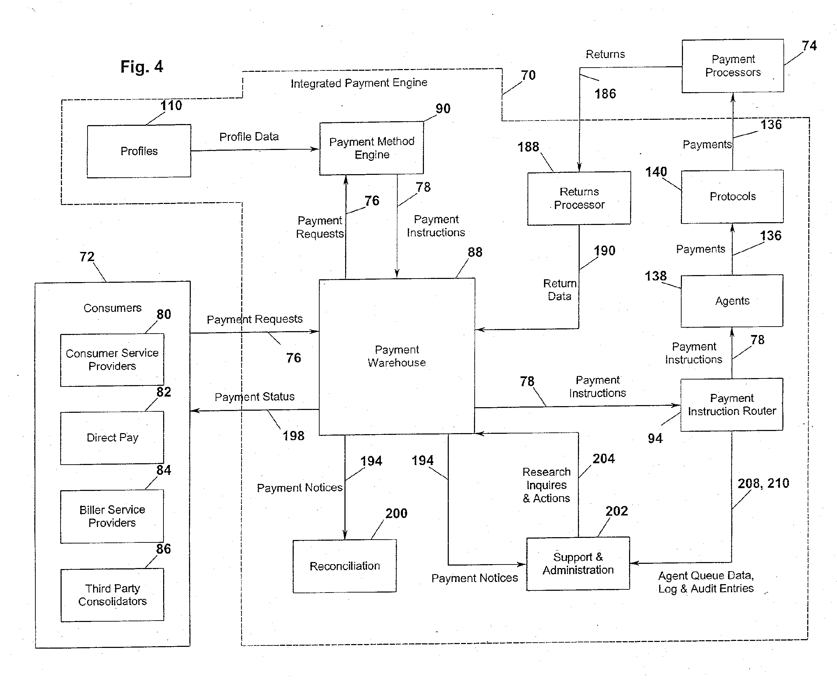

An exemplary integrated bill payment system in accordance with the present invention will now be described in more detail with reference to the schematic block diagram of Fig. 4. In accordance with the present invention, an integrated payment engine 70 may receive bill payment requests 76 from one or more different payment requesting sources 72. As discussed above, there are a variety of different types of payment requesting sources 72 via which consumers may receive bill presentment and initiate bill payment. In general, a payment requesting source 72 may be any facility whereby a consumer may initiate a bill payment, typically via a computer connection to the payment requesting source, e.g., over a computer network, such as the Internet. (Consumers may also initiate bill payments via a payment requesting source 72 with wireless devices, telephones, and other devices.) Payment requesting sources 72 manage their own consumer front-ends and all data collection for payment requests submitted by their consumer customers. The payment requesting source 72 also manages the consumer's demographics, preferences, and payee information. Payment requesting sources may provide "good or guaranteed funds" processing, establish payment limits, and warehouse future scheduled payments. The payment requesting source 72 also may edit the payment request to ensure that it meets the payee's constraints. Exemplary payment requesting sources 72 which may be coupled to an integrated payment engine70 in accordance with the present invention may include consumer service providers (CSPs) 80, direct pay sources 82, biller service providers (BSPs) 84, and third party consolidators 86. It should be understood that other known, or as yet unknown, payment requesting sources 72 also may be coupled to an integrated payment engine 70 in accordance with the present invention.

A consumer service provider (CSP) payment requesting source 80 is a consumer oriented front-end application. Typically, a CSP includes a user interface, often Internet web-based, that provides the consumer with the necessary tools and options to carry out bill receipt and payment functions. The CSP may be accessed via an on-line banking system offered by a bank or other financial institution, or by another portal.

In a direct pay payment requesting source 82, a consumer enters billing information that the consumer has received independently of the bill payment system. For example, the consumer may use a direct pay payment requesting source 82 to pay a bill to a biller which the consumer has received in the mail or over a computer network from a source other than the bill payment system itself. A direct pay system is also known as a "pay anyone" service. The direct pay payment requesting source may be implemented as an Internet web-based system.

A biller service provider (BSP) payment requesting source 84 is a biller oriented application that the consumer can access to carry out bill receipt and payment functions. A BSP 84 may be implemented as an Internet web site that houses multiple biller sites (e.g., a financial institution which maintains and processes accounts for multiple billers may provide a BSP 84 which allows a consumer to pay bills to any of the financial institution's customers) or by a single biller hosting their own BSP site. BSPs 84 may also include service providers that scan paper bills and present them in electronic form to consumers for payment.

Third party consolidator payment requesting sources 86 are run by other parties that present bills to customers, collect payment information, and forward payment requests 76 to an integrated payment engine 70 in accordance with the present invention for processing. An example of a third party consolidator is a tax preparation service that submits payments on behalf of their customers using, e.g., commercially available accounting or tax return preparation software, such as Quicken. In accordance with the present invention, the integrated payment engine 70 generates and submits payments to payment processors 74 on behalf of the consolidator.

Referring to Fig. 4, the form and content of the payment requests 76 generated by the various payment requesting sources 72 depends on a variety of factors including the type of the requesting source 72 (e.g., CSP versus BSP), the nature of the payment to be made, payment information provided by the individual consumer, etc. In general, the payment request 76 provided from the payment requesting source 72 to the integrated payment engine 70 will include data such as: a payment request identification number, a consumer data link (e.g., a pointer to an entry in a consumer information database, as will be described in more detail below), a consumer/payee data link (e.g., a pointer to a table entry in a consumer/payee information database, as will be discussed in more detail below), a consumer's funding account from which the payment is to be made, the amount to be paid, the date the payment is to be made, any special handling notices, a flag or other reference to indicate funds status (e.g., good or guaranteed funds), etc. It should be understood that other and/or different information may be included in the payment request 76, depending upon the payment requesting source 72, payment to be made, and the payment information available to and provided by the particular consumer.

Payment requests 76 provided by one or more payment requesting sources 72 to the integrated payment engine 70 are received by a store and forward component of the integrated payment engine 70, which will be referred to herein as a payment warehouse 88. In general, the payment warehouse 88 receives payment requests 76 from the payment requesting sources 72, verifies and expands the received payment requests 76 as necessary, and sends the expanded payment requests to a payment method engine 90 component of the integrated payment engine 70 to be transformed into the payment instructions 78. The payment instructions 78 generated by the payment method engine 90 are returned to the payment warehouse 88 and stored therein, along with the payment requests 76, until they are retrieved from the payment warehouse 88 by a payment instruction router 94 and forwarded thereby to a payment processor 74 to implement the actual bill payment.

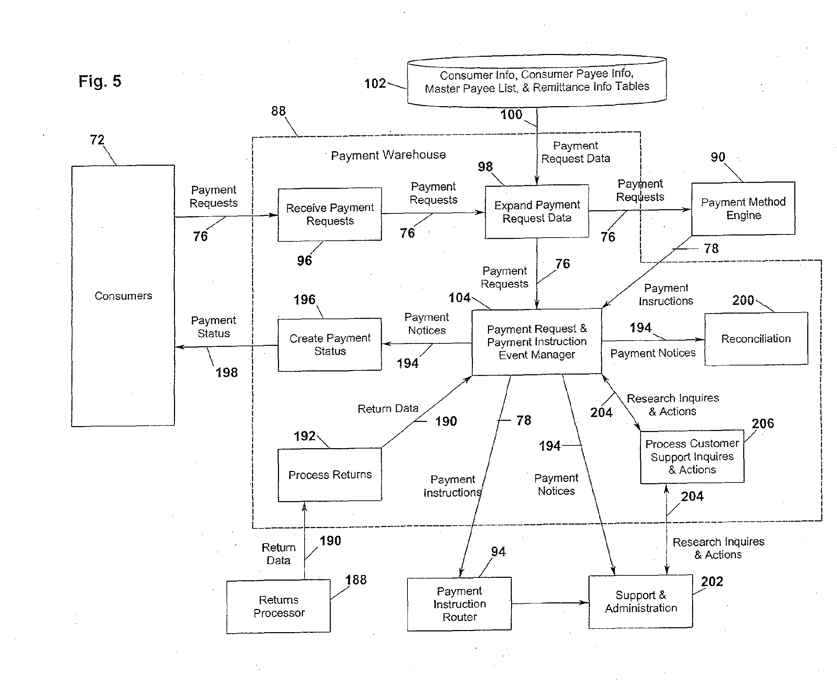

Exemplary functional components of a payment warehouse 88 in accordance with the present invention are illustrated in, and will be described in more detail with reference to, Fig. 5. The payment warehouse 88 may receive 96 payment requests 76 from the various payment requesting sources 72 in a conventional manner, using conventional networking and/or other data transfer protocols for receiving such data from the payment requesting sources 72.

The payment requests 76 received 96 by the payment warehouse 88 from the payment requesting sources 72 typically do not contain all of the information necessary to generate a payment instruction 78 therefrom. For example, payment requests 76 themselves will not typically fully identify detailed information such as the accounts from which and to which payments are to be made. This information may, however, be stored in the integrated payment engine 70 and used by the payment warehouse 88 to expand 98 the payment requests 76 as received. The function of expanding 98 the received payment request data includes adding information such as consumer funding and payee remittance information to the payment request 76 as received to complete the payment information. Such payment information may include the consumer's biller account number, the consumer's funding account number, and biller remittance data. The process of expanding 98 the payment request data may include back-dating the date the bill is to be paid to compensate for payment timing cycles. The payment warehouse 88 may also deny a payment request at this point in the process, before further processing of the payment request, if the consumer has been flagged as a "do not pay", due to collection or other issues. In such a case, a notice may be returned to the consumer, via the payment requesting source 72, indicating that the payment request has been denied.

Payment request data 100 employed by the payment warehouse 88 to expand the payment requests 76 received from a payment requesting source 72 may be stored in one or more databases 102 incorporated as part of, or accessible by, the integrated payment engine 70. Payment request data 100 stored in the database 102 includes data that uniquely identifies the parameters of the payment request 76 that was submitted to the integrated payment engine 70. Payment request data 100 stored in the database 102 preferably is stored in a format for easy retrieval by the payment warehouse 88, such as in an information table format. Examples of types of payment request data 100 that may be stored in the information tables database 102 includes consumer information, consumer/payee information, a master payee list, and remittance information. This information may be obtained or accessed by the integrated payment engine 70 from a variety of sources, such as, for example, the consumer, the biller, or third party information sources.

Consumer information stored in the information database 102 includes detailed funding account information for the account that the consumer has instructed to be used (debited) for fulfilling a payment request. The consumer information may include demographic and preference data entered by the consumer, as well as processing parameters established by the bank or portal or service provider sponsoring the payment requesting source 72. Examples of consumer information which may be provided in the database 102 include: a consumer identification number, a sponsor link to the bank and/or portal record for the bank or other portal that has the customer relationship with the consumer, the consumer's name, the consumer's address, consumer contact information (e.g., telephone number, fax number, e-mail address, cell phone number, pager number, etc.), funding account numbers and types (e.g., bank accounts (routing/transit and account numbers) and debit/credit card accounts (card numbers, PINS (personal identification numbers) (if required), expiration date, CVV/CVC number, and card holder name and address)), payment limits (including single and aggregate payment limits), the consumer's credit history (e.g., credit score, closed bank account score), etc. It should be understood that other and/or different consumer information also may be provided in the payment request data 100 used to expand 98 a payment request 76.

Consumer/payee information stored in the database 102 includes data related to the consumer's identification of a payee. This may include payee data as uniquely defined and entered by a consumer, or as selected by the consumer, or parsed automatically, from a master payee list, as will be described in more detail below. Examples of consumer/payee information include: a consumer/payee identification number, a consumer link (to a consumer information record containing payee information), a master payee link (to a master payee list record including payee information), the payee name, the payee address, the consumer's biller address with the payee, a payee nickname, a personal payee flag, a third party flag, default payment parameters (such as a default funding account from which the payment is to be made, a default amount to pay, and a default date to make the payment), a remittance address (if different from the payee address), and consumer specific edit mask values which may be determined by, and proprietary to, the consumer's payment requesting source service provider, etc. It should be understood that other and/or different consumer/payee information also may be included in the payment request data 100 used by the payment warehouse 88 to expand 98 a payment request 76.

The master payee list is a list of well-known payees that is maintained by a back-office function of the integrated payment engine 70 and that can be presented on a front-end for consumers to use when setting up a payee. Thus, even if the consumer has only limited information available to identify the payee, more detailed payee information may be selected or parsed from the master payee list. The master payee list contains payee data that is typically found on biller invoices and statements. Examples of master payee list information include: a master payee identification number, a remittance link (to a remittance information record), consumer/payee links (to consumer/payee information records), a master payee name, master payee address, payee contact information (e.g., telephone number, fax number, e-mail address, cell phone number, pager number, etc.), a payee remittance address (if different from the master payee address), etc. It should be understood that other and/or different master payee information also may be included in the master payee list.

Remittance information stored in the database 102 includes information for remittance of payments that has been collected over a period of time by the integrated payment engine operator service provider. Remittance information relates to the specific method or methods to be used in remitting payments and payment advice to payees. This data is often considered to be confidential and proprietary to the bill payment service provider. Remittance information is constantly updated as new information is received by the service provider. Examples of remittance information include: remittance identification numbers, master payee links (to master payee list records), "remit to" names, "does business as" names, preferred remittance methods (including links or pointers to a consolidator, if one is used), bill presentment methods, remittance funds (for normal payments and exception payments, including bank routing and account numbers (for ACH) or account identifiers (for other payment processors) or addresses (for paper checks or drafts), as well as payee name and contact information, e.g., telephone numbers, fax numbers, e-mail addresses, cell phone numbers, pager numbers, etc.), remittance advice information (including the address (mail, electronic, or via remittance funds transaction) and payee contact name and contact information (e.g., telephone number, fax number, e-mail address, cell phone number, pager number, etc.) to which the remittance advice is to be sent), problem resolution contact information (a contact name and contact information such as telephone number, fax number, e-mail address, cell phone number, pager number, etc.), universal processing identification code (a link to the Federal Reserve service that will translate the identification code into the bank routing and account numbers and process the payment transaction), agent and protocol preferences, and payee edit masks such as field attributes, consumer addresses, master payee addresses, and consumer biller account numbers. It should be understood that other and/or different remittance information may be included in the payment request data 100 used to expand 98 a payment request 76.

Expanded payment requests 76 are provided to a payment request and payment instruction event manager 104 of the payment warehouse, wherein the expanded payment requests 76 are stored, e.g., in a payment request table. Expanded payment requests 76 also are provided to the payment method engine 90, wherein the payment requests 76 are converted into payment instructions 78.

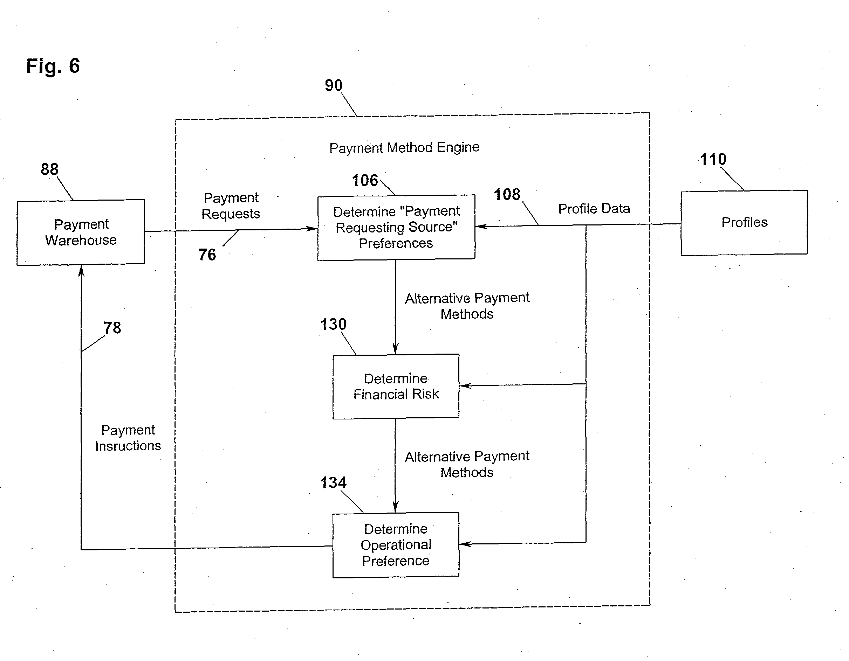

Exemplary functions performed by a payment method engine 90 in accordance with the present invention will now be described in detail with reference to Fig. 6. The payment method engine 90 applies the appropriate business logic to transform payment requests 76 into payment instructions 78. Payment instructions 78 are fully completed payment information including the payment method, the payment processor 74 to be used, and the date (and time) the payment is to be sent to the payment processor 74. Payment instruction data includes indicators of which payment processor agents 138 and protocols 140 to use, as will be discussed in more detail below. As also will be discussed in more detail below, the payment method engine 90 may generate multiple payment instructions 78 to implement a single payment request 76. Such multiple instructions 78 allow, for example, debits (from the consumer account) and credits (to the biller account) to be sent through different payment processors 74, allow debits and credits to be sent on different days or times, and facilitate consolidation of debits or credits to the same party.

In accordance with the present invention, the payment method engine 90 may contain a list of alternative available methods to execute or fulfill a payment request 76. Based on various parameters, such as payment requesting source or payee preferences, financial risk determinations, and operational preferences, the payment method engine 90 selects one of the alternative payment methods as the preferred or optimum method, and generates a payment instruction(s) 78 accordingly to implement that preferred or optimum payment method.

Each type of payment requesting source 72 from which an integrated payment engine 70 in accordance with the present invention receives a payment request 76 has its own unique requirements, constraints, or preferences that define how a bill payment must or should be made. In accordance with the present invention, the payment method engine 90 determines 106 such payment requesting source preferences to determine what alternative payment methods may be available to implement a payment request 76. In accordance with the present invention, the determination 106 of payment requesting source preferences by the payment method engine 90 is based on profile data 108 stored in a profile database 110, which may be part of, or accessible by, the integrated payment engine 70. Based on the profile data 108, the payment method engine 90 determines 106 constraints and preferences that the consumers and payment requesting sources 72 may place on payments. The payment method engine 90 may also edit the consumer's payment request 76 to ensure that it meets any payee constraints.

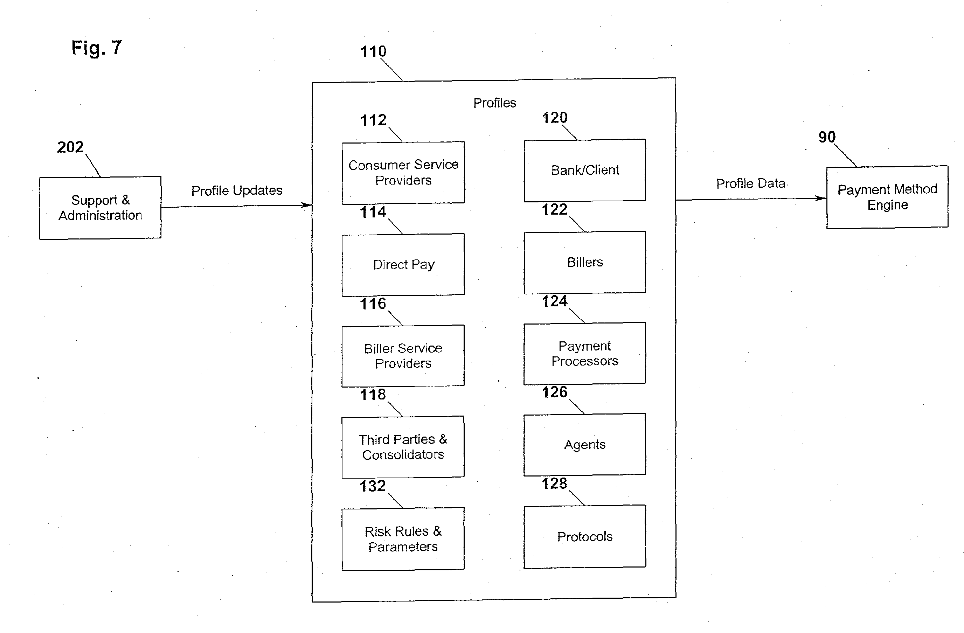

Examples of profile data 108 that may be stored in the profile database 110 are illustrated in Fig. 7. The profiles 110 include attributes for each of the payment requesting sources 72 for which the integrated payment engine 70 may provide bill payment services, for payment processing destinations 74, and for certain other system components. The profiles 110 define specific characteristics of the payment sources, payment destinations, and components that the payment method engine 90 uses to process payment requests 76. Profiles may be maintained for the constraints and preferences of various different payment requesting sources 72, such as consumer service provider 112, direct pay source 114, biller service provider 116, and third party consolidator 118 preferences, etc. Constraints and/or preferences of other entities that may be participants in the bill payment process also may be included in the profiles 110. Such entities may include banks or other system clients 120, billers 122, and payment processors 124. Bank or client information 120 stored in the profiles 110 may include information such as the specific type of funding accounts to be used, the amount of monthly service charges to be assessed, the exclusion of certain types of payments from the monthly maximum permitted, etc.. Biller information 122 included in the profiles 110 may include, for example, the type of payment (e.g., credit card) that a biller will accept. System component information that may be included in the profiles 110 may include agent 126 and protocol 128 information, as will be described in more detail below.

In accordance with the present invention, the information contained in the profiles database 110 defines the constraints and preferences that are required by each payment requesting source 72 to which the integrated payment engine 70 is coupled to process payment requests 76. To change and/or add payment requesting sources 72 to the system, all that is necessary is to modify and/or add to the payment requesting source constraint and preference information stored in the profiles 110. Similarly, additional and/or different payment processors 74 or other entities may be integrated into the system simply by updating and/or incorporating additional information in the profiles database 110. (Of course, the necessary transaction data network links also must be provided to accommodate new or different payment requesting sources or other entities to be coupled to the system.) Thus, an integrated payment engine 70 in accordance with the present invention may be coupled flexibly to provide bill payment services to a variety of different and easily changeable payment requesting sources 72, using a variety of different and easily changeable payment processors 74 and/or other participating entities, without extensive reworking and retesting of the integrated payment engine 70 or any component thereof, such as the payment method engine 90.

Returning to Fig. 6, having determined 106 the payment requesting source and other constraints and preferences, based on the profile data 108, the payment method engine 90 may determine a list of alternative possible payment methods that may be used to execute or fulfill the payment request 76. The payment method engine 90 may then determine 130 the financial risk associated with the various available alternative payment methods, to select the appropriate payment method alternatives that mitigate financial risk while satisfying, to the greatest extent possible, the preferences of the consumer. Different alternative payment methods for implementing the payment requests 76 will have different financial risks associated with them based on the consumer's failure to reimburse and/or fraud activities, etc. The risks associated with the various alternative payment methods may be determined based on risk rules and parameters 132, which may be provided in the profile database 110 (see Fig. 7). Based on the risk rules and parameters 132, and consumer information (e.g., consumer payment information) provided in the payment request 76, the payment method engine 90 may determine the risk associated with the various available alternative payment methods.

Exemplary alternative payment methods which may be considered, each of which have associated therewith different levels of risk, include: same time transactions, delayed transactions, hold transactions, good or guaranteed funds transactions, biller NSF reversal transactions, and no risk transactions, etc. In a same time transaction, credit (to the biller's account) and debit (from the consumer's account) payment transactions are submitted at the same time. In delayed transactions, an electronic debit transaction is submitted a few days prior to the credit payment transaction. This provides an opportunity to cancel the credit transaction if the debit transaction is returned. In a hold transaction, a hold is placed on a consumer's account prior to submitting the credit and debit transactions. The hold, which typically may be for the same amount as the debit transaction, does not actually debit funds from the consumer's account, but ensures that sufficient funds are available in the account until the debit transaction clears. In a good or guaranteed funds transaction, reimbursement is guaranteed by the consumer's bank through a clearing account, overdraft protection, or similar means. In a biller NSF reversal transaction, a biller allows reversal of the credit payment if the offsetting debit to the consumer's account is returned as an NSF (non-sufficient funds). A no risk transaction is a single transaction that debits a consumer's account and credits the payee's account. Alternative payment methods in addition to, and/or different from, those described herein, each with an associated level of risk, may be available to an integrated bill payment system and method in accordance with the present invention, and thus also may be considered by the payment method engine 90 as alternatives for generating payment instructions 78 from payment requests 76.

Having determined the payment requesting source preferences 106 and financial risk preferences 130, the payment method engine 90 may determine that several alternative payment methods for implementing the payment request 76 still remain available. The payment method engine 90 may select from among the available alternative payment methods a best, i.e., a preferred or most optimal, payment method, based on a determination 134 of cost and operational preferences. Cost and/or operational preference information, upon which such a determination 134 may be made, may be provided in the profile database 110 (see Fig. 7), typically as part of the payment processor profile information 124. Exemplary operational preferences which may be considered in selecting the optimum payment method include the consolidation of multiple payments to the same payee and the consolidation of payments from the same bank clearing account. Also, payment transactions may be batched to accommodate a payment processor and/or a biller processing window. A wide variety of operational preferences may be considered in determining the optimum payment method, including operational preferences related to costs, timing, and processing requirements of the payment method.

The result of selecting the optimal or preferred payment method to implement the payment request 76 is a final method which dictates the content of the payment instruction(s) 78 that is returned from the payment method engine 90 to the payment warehouse 88. An exemplary method for generating a payment instruction 78 from a payment request 76, as may be implemented by the payment method engine 90, and taking into consideration the various preferences described herein, will be described in further detail below.

Payment instructions 78 generated by the payment method engine 90 are stored, along with the expanded payment requests 76, in the payment request and payment instruction event manager 104 of the payment warehouse 88. Payment instructions 78 may be stored in the payment request and payment instruction event manager 104 in payment instruction tables, until retrieved therefrom by the payment instruction router 94.

The payment instruction router 94 generates payment transactions 136 that are sent to a specific payment processor 74 in that processor's desired format. Payment processors 74 may include various entities such as banks and other certified ACH originators, check and draft printers, credit card transaction acquirers, debit card networks, switches, and entities such as MasterCard RPPS and Visa e-pay and other payment processing destinations. The data included in the payments 136 provided to the payment processors 74 may include, in addition to the payment instruction data, transaction identifiers or trace numbers.

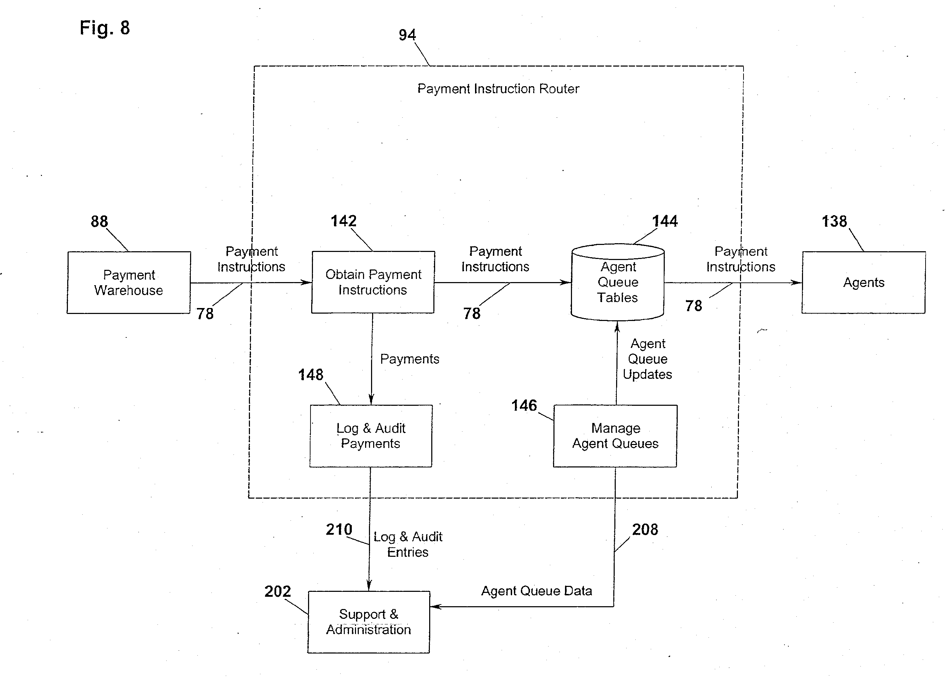

The functional components of an exemplary payment instruction router 94 in accordance with the present invention will now be described in detail with reference to Fig. 8. Payment instructions 78 stored in the payment request and payment instruction event manager 104 in the payment warehouse 88 each have a date and time associated therewith that indicates when the payment instruction should be implemented. The payment instruction router 94 retrieves current day and time payment instructions 78 from the payment warehouse 88 and routs them to the appropriate agents 138 and protocols 140. The payment instruction router 94 obtains 142 payment instructions 78 from the payment warehouse 88 when the day and time has arrived to submit them to the payment processor 74. Payment instructions 78 may be placed in agent queue tables 144 by the payment instruction router 94 based on identifying codes placed into the payment instructions 78 by the payment method engine 90. The payment instruction router 94 manages 146 the agent queues 144, e.g., to manage the number of items in the queue, record error handling, and spawn multiple copies of the same agent to provide system load leveling. The payment instruction router 94 also may provide logging 148 for all payment transactions that pass through the system, as well as track the history of changes to a transaction. This logging and auditing function 148 provides the ability (interface) to view and monitor any of this information, as will be discussed in more detail below.

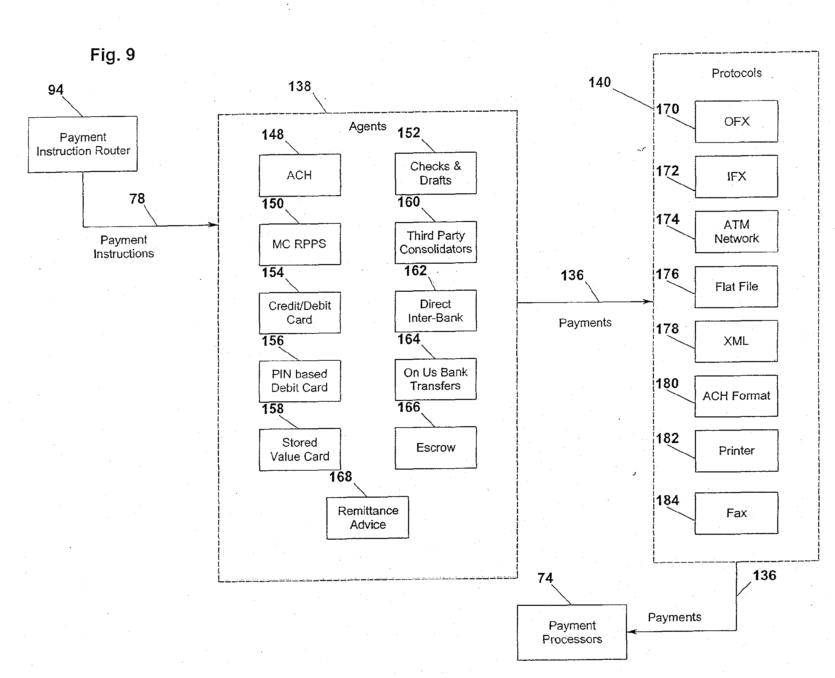

Agents 138 act on the payment instructions 78 in the agent queue 144 and use the appropriate agent profile information incorporated in the payment instruction 78 by the payment method engine 90 to create the final outbound payment transactions 136 that are sent to the payment processors 74. Each payment processor 74 is identified by a unique agent 138, which defines the characteristics of the payment processor 74. Exemplary agents which may be used in an integrated bill payment system and method in accordance with the present invention are illustrated in Fig. 9 and include ACH 148 (for each ACH originator used, such as the bank associated with a particular CSP, BSP, direct pay system, or biller), MasterCard RPPS 150, check and draft printers 152, signature based credit and/or debit cards 154, PIN based debit cards 156, stored value cards 158 (for refunds and person to person payments), third party bill payment consolidators 160, direct inter-bank transfers 162, and "on-us" bank transfers 164. An escrow agent 166 may be used to provide for the release of funds, which may already have been debited from a consumer's account, to a biller only in response to the receipt of a release message, e.g., from a biller or other entity, that goods or services have been shipped or provided to the consumer. A remittance advice agent 168 may be used to create and send remittance advisements to billers and other entities that require a separate data file, i.e., separate from the payment itself, which lists all settlement information for requests from or to them. A remittance advice typically contains credit transaction details that might not be available from the payment processors. The remittance advice may include information such as the consumer's account with the biller, the payment amount, the date of payment, the payee name, etc.

Protocols 140 format the payments 136 to meet the protocols used by the third party payment processors 74 to whom the payment is to be sent. Exemplary protocols 140, which are employed by a variety of different payment processors 74 which may be coupled to an integrated payment engine 70 in accordance with the present invention, are illustrated in Fig. 9 and include OFX 170, IFX 172, ATM network 174, Flat File 176, XML 178, ACH format 180, printer protocols 182 (e.g., for check printing), fax protocols 184, etc. An agent 138 can work with one or more different protocols 140. For example, the ACH agent 148 will specify the data fields required for an ACH file. However, there could be different ACH protocols, one for each of the ACH standard file formats (PPD, CCD, CIE, etc.). Each ACH payment processor specifies a particular protocol 140 as its standard. The ACH agent 148 would be combined with a particular protocol 140 to create the payment file 136 to be sent to that payment processor 74.

It should be noted that different and/or additional agents 138 and protocols 140 may be used in an integrated bill payment system and method in accordance with the present invention. The agents 138 and protocols 140 to be used are determined by the payment processors 74 to which the integrated payment engine 70 may send payments to be processed. The agents 138 and protocols 140 to be used to implement payments are specified by the payment method engine 90, for the specific payment processors 74 to be used, during the process of generating the payment instructions 78. Different and/or additional agents or protocols, and, therefore, additional payment processor 74, may easily be incorporated into the system by making any necessary changes or adding the required additional information to the agent 126 and protocol 128 profile data 108 stored in the profile database 110 and employed by the payment method engine 90 to generate the payment instructions 78. Therefore, an integrated bill payment system and method in accordance with the present invention is very flexible with regard to both the payment requesting sources 72 and payment processor 74 which may be incorporated into the payment system.

Returning to Fig. 4, sometimes a payment generated by the integrated payment engine 70 may be returned from a payment processor 74 because of a failure of the payment to go through. For example, if the payment processor 74 issues an ACH transaction on a consumer's bank account, in response to a payment instruction from the integrated payment engine 70, and there are insufficient funds in the consumer's account to cover the transaction amount, the payment may be returned as unpaid. Returns 186 provided from a payment processor 74 back to the integrated payment engine 70 may indicate, in general, success or failure of a particular transaction, with a reason code. In some cases, the return 186 may include notification information indicating that the information processed, but that certain data needs to be corrected. Data included in the returns 186 preferably includes an identifier for the original payment request, e.g., a trace number, a transaction identifier, and a return code indicating the reason for the return.

Returns 186 received from a payment processor 74 may be processed by a returns processor 188 to convert the return transaction 186 or file received by the payment processor 74 from the format used by the processor 74 into a system standard format which includes the return transaction, reason codes, and trace numbers to tie back to the original payment transaction. Turning now to Fig. 5, return data 190, after having been processed by the returns processor 188, and now in a standard system transaction format, may be provided to the payment warehouse 88 for processing 192 of the return. Processing 192 of the return data 190 by the payment warehouse 88 includes matching the return transaction to the originating payment transaction (via the trace number) and updating the status of the corresponding payment request 76 and payment instruction 78 in the payment request and payment instruction event manager 104. Where permitted, receipt of a return by the payment warehouse 88 may trigger the generation of a biller reversal transaction.

The payment request and payment instruction event manager 104 may issue a payment notice 194 when a requested payment has been processed. The payment notice 194 may indicate both that the processing of the payment has occurred and the current status of the payment. The payment notice 194 may contain data about each debit and credit transaction generated and executed in response to a consumer's payment request 76, e.g., the transaction purpose, its source, destination, and timing of the transaction. The payment notice 194 may include an identifier for the original payment request 76 as well as the current status code or description. From the payment notices 194, the payment warehouse 88 may create 196 a payment status notification 198 that is sent to the consumer, e.g., via the source 72 of the payment request 76. The payment status report 198 may be generated by the payment warehouse 88 automatically and sent to the consumer in response to the occurrence of particular events affecting payment status, such as the forwarding of a payment instruction 78 to the payment instruction router 94, or when a payment is returned by a payment processor 74. Typically, after processing by the integrated payment engine 70, a payment request may be assumed to be a success until, and if, a payment processor 74 returns a payment. The status of the payment may then be updated to indicate that the payment has failed, with an associated reason code.

Returning now again to Fig. 4. Payment notices 194, indicating that payment transactions have been initiated or completed, also may be provided to a reconciliation function 200 performed by an integrated payment engine 70 in accordance with the present invention. The reconciliation function 200 matches and reconciles payments and debits (from a consumer account) and credits (to a biller account) which are created by processing the payment requests 76 within the integrated payment engine 70. Often debits from a consumer account and credits to a biller account may be implemented as separate payment transactions, sometimes happening on different days. The reconciliation function 200 is provided to calculate the net settlement position. For example, the reconciliation function 200 may determine the net unencumbered balance by taking the (integrated payment engine) service provider's closing balance, adding expected funds to be received via settlement, and subtracting bill payments submitted to a payment processor 74 by the integrated payment engine 70, but not yet completed. Changes in collections may be determined, as well as any changes in collection reserves. Subscriber fees, which are the fees paid to the service provider for providing bill payment services, also may be determined by the reconciliation function 200.

An integrated payment engine 70 in accordance with the present invention preferably also provides a support and administration function 202. The support and administration function 202 may include customer support and system administrative processes. Bill payment customer support typically is provided through customer service representatives (CSRs). CSRs perform inquiry, research, adjustments, or other actions 204 to support consumer bill payment activities. Inquiries and transactions 204 related to consumer payment requests 76, and the payment instructions 78 generated thereby, and the status thereof, as submitted by CSRs, may be processed 206 by the payment warehouse 88 (see Fig. 5). The payment warehouse 88 thus supports 206 the research inquiries 204 and other actions to obtain the required payment request 76 and payment instruction 78 or payment status information from the payment request and payment instruction event manager 104, and to send the requested information back to the CSR 202. All CSR inquiries, and actions that are taken as a result of inquiries, including entering additional payment requests 76, are added to the payment request and payment instruction event manager 104. Payment notice information 194 (as described above) also may be provided to the customer support function 202 from the payment request and payment instruction event manager 104 of the payment warehouse 88.

System administration functions 202 provided or supported by the integrated payment engine 70 include back-office administration functions that allow set up and management of the various system components and their profiles within the integrated payment engine 70. For example (see Fig. 7), the system administration function 202 may be used to add to or modify the payment requesting sources 72, payment processors 74, and other entities or parameters serviced or used by the integrated payment engine 70 by modifying the profiles 110 used by the system to generate payment instructions 78, as described above. Also, (see Fig. 8) agent queue data 208 may be obtained by the support and administration function 202 from the payment instruction router 94 to monitor the agent queues 144 and their performance. Similarly, log and audit entries data 210, that provides a history of the payment instructions 78 as they move through the system, may be monitored via the support and administration function 202. Such data includes transaction information with "created by", "changed by", and date/time information, as well as the field-data element that was changed during processing.

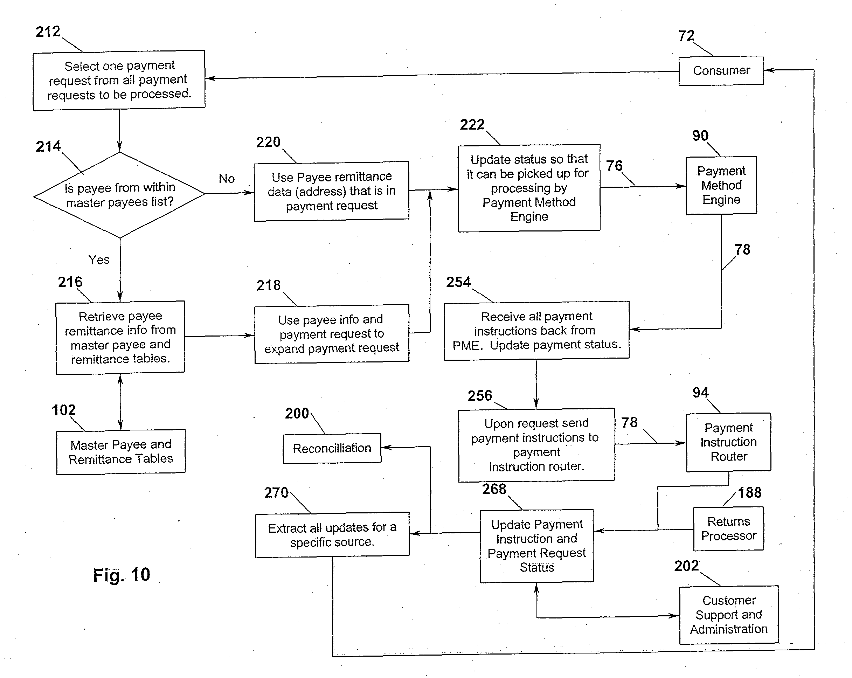

An exemplary integrated bill payment method in accordance with the present invention, which may be implemented by an integrated bill payment system in accordance with the present invention, will now be described in detail with reference to the flowchart diagram of Fig. 10. An integrated payment engine 70 in accordance with the present invention (e.g., the payment warehouse 88 function thereof) begins by selecting 212 one payment request 76 from all payment requests 76 received to be processed. Payment requests 76 may be processed in order as they are received from the various payment requesting sources 72 to which the integrated payment engine 70 is coupled, or may be stored for batch processing in any order desired to maximize system processing efficiency or any other operational or other criteria.

The selected payment request 76 may be expanded by the payment warehouse 88, as described above, to incorporated more detailed information into the payment request 76 than is provided by the consumer, so that an appropriate payment instruction 78 may be generated therefrom. For example, as part of the process of expanding the payment request data, the payment warehouse 88 may determine 214 whether the payee identified in the payment request 76 also is identified within a master payee list which is stored as part of the payment request data 100 in a database 102 accessible by the payment warehouse 88. If the payee identified in the payment request 76 is within the master payee list, the appropriate payee remittance information may be retrieve 216 from the master payee and remittance tables stored in the database 102 and used 218 to expand the payment request 76. If the payee identified in the payment request 76 is not within the master payee list, the payee remittance data (address) that is in the payment request as submitted must be used 220. Other similar processes also may be performed by the payment warehouse 88 to expand the payment request data provided in the payment request 76. After the payment request 76 is expanded by the payment warehouse 88, the status of the payment request 76 is updated 222 to indicate that the payment request 76 is ready to be processed by the payment method engine 90 to generate a payment instruction 78 therefrom. (At this point the expanded payment request 76 also is stored in the payment request and payment instruction event manager 104.)

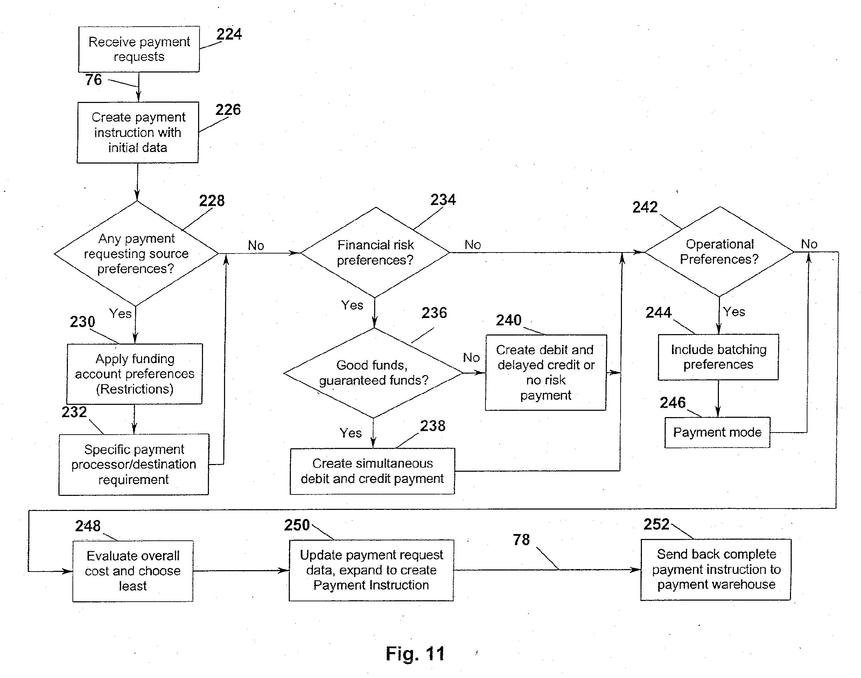

An exemplary method that may be implemented by a payment method engine 90 in accordance with the present invention to generate a payment instruction 78 from a payment request 76 received from a payment warehouse 88 in accordance with the present invention will now be described in detail with reference to the flowchart diagram of Fig. 11.

The payment method engine 90 receives 224 payment requests 76 from the payment warehouse 88. A basic payment instruction may be created 226 based on the initial data contained in the expanded payment request 76 itself.

The payment method engine may then determine 228 if there are any payment requesting source constraints or preferences. As discussed above, payment requesting source constraints and preferences are those constraints and preferences imposed on the payment instruction 78 to be generated by the integrated payment engine 70 by the particular payment requesting source 72 from which the payment request 76 is generated. As discussed above, payment requesting source constraints and preferences may be stored as profiles in a profile database 110, which is easily updated to change and/or add to the payment requesting sources 72 which may be serviced by an integrated payment engine 70 in accordance with the present invention. If any payment requesting source conditions or preferences must be considered, these are incorporated into the payment instruction from the profile data 110. For example, at this point the payment method engine 90 may apply funding account preferences 230 or other restrictions on the consumer account from which the payment is to be made, as specified by any payment requesting source conditions or preferences. Applying funding account preferences and/or restrictions to the payment instructions may include confirming that a payee accepts the type of payment specified in the payment request 76. Similarly, specific payment processor and/or destination requirements 232, as specified in the payment requesting source conditions and preferences, may be incorporated into the payment instruction 78. It should be understood that other and/or different payment requesting source conditions and preferences than those just described also may be used to generate or modify the payment instruction.

After considering any payment requesting source conditions and/or preferences, the payment method engine 90 may consider whether any financial risk preferences 234 exist which should be used to modify the payment instruction. As discussed above, financial risk preferences may be used to determine available alternative payment methods for implementing a payment request based on risk rules and parameters 132 stored in the profile database 110. Experience with payments by a particular consumer concerned, as well as the type of funding account, and other considerations, may be used to determine the financial risk level of various alternative payment methods. For example, at this stage in the process of generating a payment instruction, the payment method engine 90 may determine 236 whether the debit from the consumer funding account to make the payment represents good or guaranteed funds. If this is the case, the payment method engine may create 238 simultaneous debit (from the consumer account) and credit (from the biller account) payments, i.e., separate debit and credit payment instructions that may be executed simultaneously. If this is not the case, and there would be too much risk in crediting the biller's account without funds first clearing the consumer's account, the payment method engine 90 may create 240 payment instructions which implement a debit from the consumer's account with the credit payment to the biller's account delayed until the debit clears the consumer's account. Alternatively, the payment method engine 90 may create a single "no risk" payment instruction (e.g., a draft on the consumer's account) that both debits the consumer's account and credits the biller's account. It should be understood that other financial risk preferences may be considered, and that various other factors could be considered in determining financial risk, such as consumer credit scores, etc.

In accordance with the present invention, the payment method engine 90 may also determine 242 whether any operational preferences should be considered in generating the payment instruction. As discussed above, operational preferences 242 relate to the cost of implementing the payment instruction, and are typically stored in the profiles for the various payment processors 74 that will implement the payments. By applying various operational preferences, alternative payment methods which may be available to be used to implement a payment request, but having different cost levels, may be considered. Examples of operational preferences to be considered include batching preferences 244. By batching of payments, e.g., by consolidating debits from a particular financial institution, or consolidating credits to a particular payee, processing efficiencies and/or cost benefits may be achieved. Operational preferences associated with the payment mode selected 246, e.g., the associated cost of processing a payment (ACH versus other electronic transaction versus paper check, etc.) also may be considered. Other and/or different operational preferences than those described, such as the timing of payments to coincide with peak processing of network operations, or vice versa, also may be considered at this point.

After having considered any payment requesting source preferences 228, financial risk preferences 234, operational preferences 242, and/or other preferences defined by the consumer, payment processor, integrated payment engine operator, or third party, the payment method engine 90 evaluates 248 the overall cost (operational and risk) of various alternative possible payment methods (as limited by any payment requesting source preferences), and from the various alternatives chooses 248 the least cost or otherwise preferred or most optimum payment method. Based on this determination, the payment method engine updates and expands the payment request data to create 250 a payment instruction that implements the preferred payment method.

The payment method engine 90 may generate the payment instruction as a script of instructions, i.e., a series of actions to be implemented by a payment processor 74, which implement the payment request. As discussed above, the payment method engine 90 may generate a script of payment instructions that implement more than one transaction from a single payment request. For example, the payment method engine 90 may generate payment instructions that implement separate debit transactions (debit consumer and credit a central account) and credit transactions (debit the central account and credit the payee account) to implement a payment request. In the case of certain funding accounts, however, such as a credit card account, there may be only one transaction that contains inherently both the consumer debit and payee credit. Examples of transactions that combine a consumer debit and a payee credit into a single transaction are a signature-based debit card transaction and a pre-authorized draft drawn on a consumer's account.

The payment instruction 78 (or series of instructions) generated by the payment method engine 90 is returned 252 to the payment warehouse 88 for further processing.

Returning to Fig. 10, the payment warehouse 88 receives 254 all payment instructions 78 back from the payment method engine 90. As discussed above, all payment instructions 78 are saved in the payment request and payment instruction event manager 104, along with the payment requests 76 from which the payment instructions 78 are generated.

Upon request, e.g., at the appropriate date and time indicated in the payment instruction 78, the payment instructions 78 stored in the payment warehouse 88 are sent 256 to the payment instruction router 94.

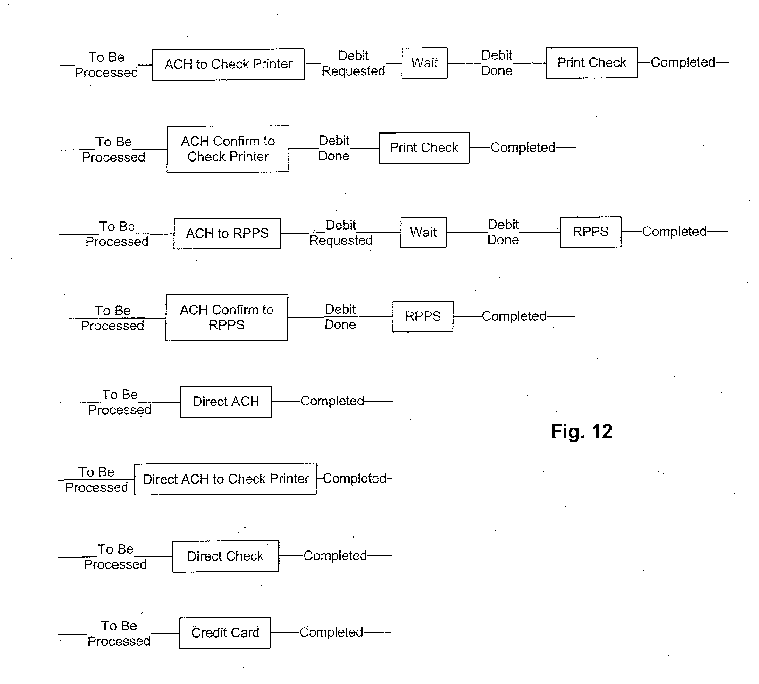

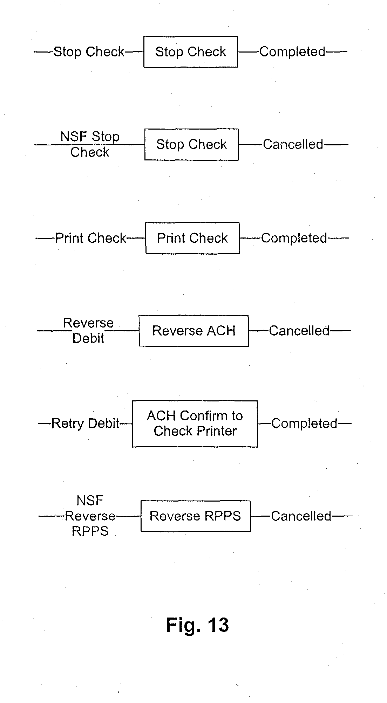

As discussed above, the payment instruction router 94 directs the payment instructions 78 to the payment processor 74 indicated in the payment instruction 78 via the appropriate agents 138 and protocols 140. The payment instruction router 94 may use a system of elements that are joined together to create an instruction that is executed by an agent 13 8. A string of elements joined together is called a workflow. An element is a unit of action or step that needs to be performed by the payment processor 74 in processing a payment. Every element has a pre and post-status that indicates when it can be used, as well as when it is complete. Typically an element can be used in any position or point in workflow as long as the pre and post-conditions can be met. Execution of a workflow results in a completed payment that can then be formatted to be sent to a particular third party payment processor 74. The elements drive the protocol 140 or formatting requirement for the payment to be fulfilled. Workflows can be set up as either automatic or manually triggered. Automatic workflows cover situations that can be scripted end to end in terms of rules. Exemplary automatic workflows are illustrated in Fig. 12. Manually triggered workflows are good for cases where there is an exception that might require manual intervention or research before further action can be initiated. Exemplary manual workflows are illustrated in Fig. 13. Once the framework for an element is defined (possible status, action to be performed, etc.), adding additional elements will typically be low-development overhead. As long as all possible elements are defined up front, stringing them together to form various workflows is only a matter of metadata creation and testing (very low development overhead).

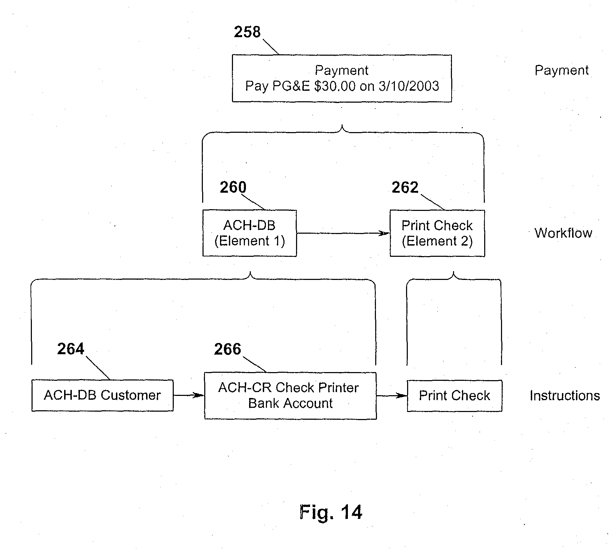

An example of the generation of a simple set of instructions to implement a workflow to implement a simple payment request is illustrated in Fig. 14. In this case, the payment 258 to be implemented is to pay a particular biller (PG&E) a particular amount ($30) on a particular date (3-10-2003). The payment would also identify the consumer account from which the payment is to be made. Based on the various preference criteria which may be considered by the payment method engine, the preferred or optimum workflow to implement this payment may include two elements: an ACH debit 260 from the consumer account (element 1) followed by a printed check 262 to be sent to the biller account for the amount stated in the payment request (element 2). These elements 260, 262 define each "step" of the payment.

As an element defines each of the components that make the workflow, every element can be made up of one or more instructions. For example, as illustrated in Fig. 14, the element 260 implementing an ACH debit may include the instructions implementing an ACH debit from a consumer account 264 followed by a corresponding ACH credit to the check printer bank account 266. Of course, it should be understood that the example illustrated in Fig. 14 is a very simple example, and that typical payment situations will require more elements, meaning more complex workflows. Also, a particular payment might require more than one workflow to complete it.

Exemplary workflow and element data structures may be implemented as follows:

WORKFLOW
WF_NAME
Name of the workflow
WFTYP_ID
0 - Automatic workflow (it will be used for normal payment processing)
1 - Exception workflow (it is used to recover the payment from an exception)
WFSTA_ID
0 - In Active
1 - Active
WF_MIN_AMT
Payments with at least this amount only could use this workflow.
WF_MAX_AMT
Payments with at most this amount only could use this workflow.
EBPPCAT_ID
This workflow belongs to one of the following
0 - CSP and BSP
1 - CSP Only
2 - BSP Only
PMTMDL_ID
This is the payment model, for which this workflow belongs to.
PMTMOD_ID
The BPP/Merchant should allow this payment mode to use this workflow.
WF_ORDER
Order of the workflows in case if they are displayed on UI.
ELEMENT (This one is specific to particular type of payment, generic elements can be designed along similar lines)
ELM_NAME
Name of the element
ELM_RULE
Rule of this element. Currently used only for WAIT element.
INSTR_ID
Instruction associated with this element.
ELM_COST
Cost ($) of this element, used in selecting the workflow.
ELM_BANK....
These fields are used to print a check
ELM__ACH_ODFI_PREFIX
This is used in generating the ACH file (used in the batch header)
ELM_ENTRY_DESC
This is used in generating the ACH file (used in the batch header)
ACHTR_ID
This is used in generating the ACH file
It points to CBACH_TRANSFER,
where the ach_originator, ach_ odfi, ach_operator information is stored.
RPSTR_ID
This is used in generating the RPS file
It points to CBRPS_TRANSFER,
where the rps originator, rps odfi, rps operator information is stored.
ELM_ADDR...
This is used in printing check
ELM_MIN_AMT
Payment should have at least this amount to use this element.
ELM_MAX_AMT
Payment should have at most this amount to use this element.
The following columns are informative and are not used in the logic.
ELM_REVERSAL_FLAG
Whether this element can be reversed or not.
ELM_CUT_OFF_TIME
What is the cut off time required for this element
Ie No payment should scheduled after that time
ELM_KICK OFF_TIME
What is the time by which this element has to be executed
ELM_DURATION
Time taken to execute this element (in real)
ELM_EXCEPTION_FLAG
Whether exception occurs for this or not

Returning once again to Fig. 10, upon forwarding a payment instruction 78 to the payment instruction router 94, the payment warehouse 88 may update 268 the payment information in the payment request and payment instruction event manager 104 to indicate that the payment has been implemented. Similarly, upon receiving a return from the returns processor 188, the payment warehouse 88 may update 268 the payment instruction and payment request information to indicate that an attempted payment has failed.

Based on the updated payment instruction and payment request information stored in the payment warehouse 88, a reconciliation function 200, as described above, may be performed. Similarly, the customer support and administration function 202 may access the updated payment instruction and payment request information stored in the payment warehouse 88 to provide consumer support functions. Payment status information stored in the payment warehouse 88 may be extracted 270 from the updated payment instruction and payment request information stored in the warehouse 88 to generate payment status notices which are provided back to the consumer 72, as described above.

It should be understood that the present invention is not limited to the particular exemplary embodiments and applications described herein, but embraces all variations thereof that come within the scope of the following claims.

## Claims

1. An automated method for payment, comprising:
(a) storing in a profile database payment preference information for a plurality of payment requesting sources of different types;
(b) receiving payment requests from a plurality of payment requesting sources;
(c) generating payment instructions from the received payment requests and the payment preference information for the payment requesting sources from which the payment requests are received; and
(d) sending the payment instructions to a payment processor.

2. The method of claim 1, wherein said payment requesting sources include a plurality of payment entities selected from the group of payment entities consisting of payment requesting sources, billers, bank/clients, and payment processors.

3. The method of Claim 1 wherein the payment preference information includes payment preference information for a plurality of payment requesting sources, wherein receiving a payment request includes receiving a payment request from a one of the plurality of payment requesting sources, and wherein generating a payment instruction includes generating a payment instruction from the payment request and the payment preference information for the payment requesting source from which the payment request is received.

4. The method of Claim 3 comprising additionally modifying the payment preference information stored in the profile database to add payment preference information for another payment requesting source thereto.

5. The method of Claim 3 wherein the payment preference information includes payment preference information for a plurality of payment requesting sources of different types, wherein receiving a payment request includes receiving a payment request from a payment requesting source of one of the plurality of types of payment requesting sources, and wherein generating a payment instruction includes generating a payment instruction from the payment request and the payment preference information for the payment requesting source from which the payment request is received, and preferably wherein the payment preference information includes payment preference information for a plurality of payment requesting sources of different types including a consumer service provider payment requesting source and a biller service provider payment requesting source.

6. The method of Claim 1 wherein the payment preference information includes payment preference information for at least one biller and wherein generating a payment instruction includes generating a payment instruction from the payment request and the biller payment preference information, or wherein the payment preference information includes payment preference information for at least one bank/client and wherein generating a payment instruction includes generating a payment instruction from the payment request and the bank/client payment preference information, or wherein the payment preference information includes payment risk information and wherein generating a payment instruction includes selecting a payment method from among a plurality of payment methods based on the payment risk information, or wherein the payment preference information includes operational preference information and wherein generating a payment instruction includes selecting a payment method from among a plurality of payment methods based on the operational preference information to optimize an operational parameter.

7. The method of Claim 1 comprising additionally expanding the payment request and wherein generating a payment instruction includes generating a payment instruction from the expanded payment request and the payment preference information.

8. The method of Claim 1 wherein the payment preference information includes payment processor preference information for a plurality of payment processors and wherein generating the payment instruction includes generating a payment instruction from the payment request and the payment processor preference information for the payment processor to which the payment instruction is sent, and preferably wherein the payment processor preference information includes agent and protocol information for a plurality of payment processors.

9. The method of Claim 1 comprising additionally saving the payment request and the payment instruction in a payment warehouse database.

10. The method of Claim 9 wherein generating the payment instruction includes defining a payment time and sending the payment instruction to the payment processor includes routing the payment instruction from the payment warehouse database to the payment processor at the payment time, or comprising additionally receiving returns data from a payment processor and storing the returns data in the payment warehouse database.

11. The method of Claim 1 wherein generating a payment instruction includes generating more than one payment instruction from the payment request.

12. The method of Claim 1 wherein the profile database includes payment preference information for at least one consumer service provider payment requesting source and at least one biller service provider payment requesting source, and wherein the step of generating payment instructions includes generating payment instructions from payment requests received from the at least one consumer service provider payment requesting source and the at least one biller service provider payment requesting source, or comprising additionally modifying the bill payment preference information stored in the profile database to add bill payment preference information for another payment requesting source thereto.

13. An automated system for making payments, comprising:
(a) a profile database including payment preference information for a plurality of payment requesting sources of different types;
(b) a payment warehouse database for receiving payment requests from the plurality of payment requesting sources and storing the payment requests and payment instructions therein;
(c) a payment method engine coupled to the profile database and the payment warehouse database and adapted to generate payment instructions from the payment requests and the payment preference information in the profile database for the payment requesting sources from which the payment instructions are received and to send the generated payment instructions to the payment warehouse database for storage therein; and
(d) a payment instruction router coupled to the payment warehouse database and adapted to send payment instructions from the payment warehouse database to a payment processor.

14. The automated system for making payments of claim 13, wherein said payment requesting source includes a profile database including payment preference information for a plurality of payment entities selected from the group of payment entities consisting of payment requesting sources, billers, bank/clients, and payment processors.

15. The automated system for making payments of Claim 14 wherein the payment preference information stored in the profile database includes payment preference information for a plurality of payment requesting sources and wherein the payment method engine is adapted to generate payment instructions from the payment requests and the payment preference information for the payment requesting sources from which the payment requests are received.

16. The automated system for making payments of Claim 15 comprising additionally an administration function means coupled to the profile database for modifying the payment preference information stored in the profile database to add payment preference information for another payment requesting source thereto.

17. The automated system for making payment of Claim 15 wherein the payment preference information stored in the profile database includes payment preference information for a plurality of payment requesting sources of different types and wherein the payment method engine is adapted to generate payment instructions from the payment requests and the payment preference information for the payment requesting sources from which the payment requests are received, and preferably wherein the payment preference information stored in the profile database includes payment preference information for at least one consumer service provider payment requesting source and at least one biller service provider payment requesting source.

18. The automated system for making payments of Claim 13 wherein the payment preference information stored in the profile database includes payment preference information for at least one biller and wherein the payment method engine is adapted to generate payment instructions from the payment requests and the biller payment preference information, or wherein the payment preference information stored in the profile database includes payment preference information for at least one bank/client and wherein the payment method engine is adapted to generate payment instructions from the payment requests and the bank/client payment preference information, or wherein the payment preference information stored in the profile database includes payment risk information and wherein the payment method engine is adapted to generate a payment by selecting a payment method from among a plurality of available payment methods based on the payment risk information or wherein the payment preference information stored in the profile database includes operational preference information and wherein the payment method engine is adapted to generate a payment instruction by selecting a payment method from among a plurality of payment methods based on the operational preference information to optimize an operational parameter.

19. The automated system for making payments of Claim 13 wherein the payment warehouse additionally is adapted to expand the payment requests received thereby and to store the expanded payment requests therein and wherein the payment method engine is adapted to generate the payment instructions from the expanded payment requests and the payment preference information.

20. The automated system for making payments of Claim 13 wherein the payment preference information stored in the profile database includes payment processor preference information for a plurality of payment processors and wherein the payment method engine is adapted to generate payment instructions from the payment requests and the payment processor preference information for the payment processors to which the payment instructions are to be sent, and preferably wherein the payment processor preference information stored in the profile database includes agent and protocol information for a plurality of payment processors.

21. The automated system for making payments of Claim 13 wherein the payment method engine is adapted to define a payment time for each payment instruction generated thereby and wherein the payment instruction router is adapted to send the payment instructions from the payment warehouse to the payment processors at the times defined in the payment instructions.

22. The automated system for making payments of Claim 13 comprising additionally a returns processor coupled to the payment warehouse and adapted to receive returns data from a payment processor and store the returns data in a payment warehouse database, or wherein the payment method engine is adapted to generate one or more payment instructions from each payment request based on the payment preference information.

23. The automated system for making payments of Claim 13 wherein the payment preference information stored in the profile database includes payment preference information for at least one consumer service provider payment requesting source and at least one biller service provider payment requesting source and wherein the payment method engine is adapted to generate payment instructions from payment requests received from the consumer service provider payment requesting source and the biller service provider payment requesting source, or comprising additionally an administration function means coupled to the profile database for modifying the payment preference information stored in the profile database to add payment preference information for another payment requesting source thereto.

24. An automated system for making payments, comprising:
(a) a payment warehouse database adapted to receive payment requests from a plurality of payment requesting sources of different types and storing the payment requests and payment instructions therein;
(b) a payment method engine coupled to the payment warehouse database and adapted to generate payment instructions from the payment requests for the payment requesting sources from which the payment instructions are received and to send the generated payment instructions to the payment warehouse database for storage therein; and
(c) a payment instruction router coupled to the payment warehouse database and adapted to send payment instructions from the payment warehouse database to a payment processor.

25. The automated system for making payments of Claim 24 wherein the payment warehouse database is adapted to receive payment requests from at least one consumer service provider payment requesting source and at least one biller service provider payment requesting source and wherein the payment method engine is adapted to generate payment instructions from payment requests received from the consumer service provider payment requesting source and the biller service provider payment requesting source.

26. The automated system for making payments of Claim 24 comprising additionally a profile database including payment preference information for a plurality of payment requesting sources of different types and wherein the payment method engine is coupled to the profile database and adapted to generate the payment instructions from the payment requests and the payment preference information for the payment requesting sources from which the payment requests are received, and preferably comprising additionally an administration function means coupled to the profile database for modifying the payment preference information stored in the profile database to add payment preference information for another payment requesting source thereto.

27. A computer program comprising instructions for implementing the method as claimed in any one of claims 1 or 2 or 24 to 26.

28. A computer readable medium storing or representing a computer program as claimed in claim 27.

29. A computer configured to implement a program as claimed in claim 27.

30. A profile database, payment processor, payment warehouse database or payment instruction router for use in a system or method as claimed in any proceeding claim.
